# EUROPEAN PATENT SPECIFICATION

(11) **EP 1 503 620 B1**
(45) Date of publication and mention of the grant of the patent: **25.07.2007**
(21) Application number: 03722818.6
(22) Date of filing: 08.05.2003
(51) Int. Cl.: A01G 9/10

(54) **CONDITIONED PARTICULATE SUBSTRATE STRUCTURE AND METHOD FOR PARTICULATE SUBSTRATE CONDITIONING**
STRUKTUR VON KONDITIONNERTEM PARTIKELFÖRMIGEN SUBSTRAT UND VERFAHREN ZUM KONDITIONNIEREN VON PARTIKELFÖRMIGEM SUBSTRAT
STRUCTURE DE SUBSTRAT PARTICULAIRE CONDITIONNE ET PROCEDE DE CONDITIONNEMENT ASSOCIE

(30) Priority: 11.05.2002 GB 0210863
(43) Date of publication of application: 09.02.2005
(73) Proprietor: NEWCASTLE UNIVERSITY VENTURES LIMITED, Newcastle upon Tyne NE1 1XX (GB)
(72) Inventor: JONES, Colin John Francis Philip, Newcastle Upon Tyne NE1 7RU (GB); LAMONT-BLACK, John, Newcastle upon Tyne NE1 7RU (GB); GLENDENNING, Stephanie, Newcastle upon Tyne NE 7RU (GB)
(74) Representative: Wilson, Peter
(86) International application number: PCT/GB2003/001907
(87) International publication number: WO 2003/094599

(56) References cited:
- WO-A-00/39405
- WO-A-02/02875
- US-A- 4 678 554
- US-A- 5 980 155

## Description

The invention relates to a method of conditioning a particulate substrate such as a growing medium structure to control and optimise surface layer properties, for example growing conditions for vegetative matter growing at the surface thereof. The invention also relates to a particulate substrate structure incorporating constructions and adaptations to effect such conditioning. The invention in particular relates to a method and construction of conditioned natural turf for a sports playing surface field and the like, or to a method and construction of conditioned agricultural growing medium.

In any growing medium, such as a soil or like structure, which is used to grow vegetative matter in a surface layer thereof, control of various properties at the surface layer, and in particular in the vicinity of the roots of the growing vegetable matter, is of critical importance to the growth process. Whether vegetative matter grows at all, growth rates, consistency of ground cover, strength and robustness of the plants, yield etc. are all critically dependent on various factors relating to the soil or other growing medium.

Of most significant importance is control of moisture and soil atmosphere composition at the roots. In many instances this might mean the necessity to provide adequate drainage. In other circumstances, an ability to increase moisture at the roots, for example in some form of active irrigation, might be desirable. Water, along with temperature and light which are typically supplied by the external environment, is the most critical single factor which can be controlled to optimise growth conditions. However, a number of other factors can have significant bearing on the growth of the plant matter.

In particular, it can be desirable to condition the area adjacent to the roots in a number of other ways, for example to ensure adequate supply of oxygen, to control pH, to decompact the soil, to retain nutrients, to control the temperature and/or to prevent freezing of the surface layer etc.

Similar considerations can apply in relation to particulate substrates other than growing media, such as might be provided for sport and recreational arenas, for example clay tennis courts and the like. Drainage and surface layer moisture control are again critical, as is control of surface layer compaction.

Various drainage structures have been proposed with varying degrees of complexity.

At the simplest, established drainage structures merely comprise structures which provide a ready physical path for water to drain away, perhaps through conduits, channels or the like within the structure below the ground surface. Such structures are of only limited adequacy.

The use of geosynthetic materials for reinforcement or drainage purposes is also established practice. Geosynthetics, also known as and sometimes referred to as geotextiles, are typically referred to by their principle function for any particular application and since there are essentially five principle functions there are five types of geosynthetics. These are filtration, separation, membrane, drainage and in plane flow, and reinforcement geosynthetics. Geosynthetics in particular provide for improved drainage and reinforcement of a substrate material such as the growing medium to which the present invention applies.

Basic geosynthetic drain structures have comprised an elongate plastics core of geosynthetic material, typically surrounded by a filter material and/or support by a reinforcing material. The core material is configured, for example by provision of suitable corrugations or use of a mesh like structure, to define a series of elongate channels for conducting fluid. Water is free to pass through the filter and/or reinforcing materials into these corrugations. The ground may be drained actively rather than passively by application of a surcharge load to force water through these channels. Similar considerations apply to vertical and horizontal drains.

GB 2 301 311 relates to improvements in geosynthetics and introduces electrokinetic geosynthetics (hereinafter referred to as EKGs). EKGs are electrically conductive geosynthetics or geotextiles, which offer enhanced performance over non-conductive geosynthetics. This prior art document discloses EKG structures including layers of drainage and reinforcement geosynthetics stitched together with conductive fibres. The reinforcement and/or drainage material may also be conductive.

EKGs, in addition to providing filtration, drainage and reinforcement can be enhanced by electrokinetic techniques for the transport of water and hence for drainage. The ability of electrokinetic phenomena to move water, charged particles and free ions through fine-grained low permeability substrate is established.

There are five principle electrokinetic phenomena: streaming potential, sedimentation potential, electro-osmosis, ion migration and electrophoresis. The first two of these phenomena are concerned with the generation of electrical potential due to the movement of charges and charged particles respectively. The remaining three are concerned with the transport mechanisms developed upon application of an electrical field across a substrate mass. Of these, electro-osmosis is the most significant for the exploitation of EKGs in drainage.

An electrical field is applied across a substrate mass using EKG or conventional electrodes. Cations are attracted to the cathode and anions to the anode. In electro-osmosis, as the ions migrate they carry their hydration water with them and exert a frictional force on the water around them. Hence, there is a flow of water at both the anode and the cathode and within the material in between. In order to maintain a charge neutrality however, there are more cations than anions in the pore fluid of the substrate. Therefore there is a net flow of water to the cathode, which can be used to drive a more active drainage process. This electro-osmotic flow depends upon the applied voltage gradient and the electro-osmotic permeability of the substrate.

W002-02875 describes various structures for drainage and consolidation of a particulate substrate, for example including a horizontally disposed anode and cathode within the bulk substrate, and a means to drive a potential difference thereacross to drive an electro-osmotic drainage and consolidation process.

US4678554 discloses a particulate substrate incorporating a mesh of electrode elements to drive a drainage process within the substrate.

Thus, a number of drainage methods are known in the prior art. However, control of moisture is not the only problem. Control of other surface layer conditions, and in particular control of compaction, is of importance. For example, where the substrate is a growing medium, optimum growth also depends upon control of the volume of the growing medium in the vicinity of the roots in particular, to prevent and/or alleviate compaction; ensuring an adequate supply of nutrients to the roots; ensuring an adequate supply of oxygen to the roots; controlling the pH of the growing medium; controlling the temperature of the medium; etc.

Compaction is a particular problem in relation to turf structures, for example sports pitches, show grounds and the like. Even when otherwise relatively technologically advanced systems are used, compaction is still generally dealt with in the traditional physical manner, by applying a physical decompaction force to the surface through spikes or the like. Spiking also aerates the surface layer to allow oxygen to reach the roots. The procedure is laborious and time consuming and in itself it may apply a compactive effort. It is thus not ideal.

Temperature control can be effected by under soil heating, wherein conduits within the soil structure carry a material at elevated temperature which is circulated to raise the temperature in its immediate surroundings. Such a solution is not ideal. In particular, heating tends to be uneven, hot spots can develop, and this can be detrimental to even turf growth.

Control of pH and nutrient levels is traditionally effected by addition of chemical treatments to the top surface of the growing medium, which are allowed to percolate through under the action of either rain or artificial watering.

It is an object of the present invention to provide a method for conditioning of a growing medium and a growing medium with built in structure to effect such conditioning which mitigates some or all of the above disadvantages.

It is a particular object of the present invention to provide a method for conditioning of a growing medium and a growing medium structure which is effective and efficient in draining and/or controlling moisture in the surface layer of the growing medium, but which offers additional functionality in relation to optimising the growth conditions at the roots.

It has now been surprisingly found that a system based on EKGs with suitable structures, controls and operational parameters can provide many of these extra functions in addition to the drainage function recognised in the prior art in admirable manner.

Thus, according to the present invention in its first aspect there is provided a particulate substrate structure according to claim 1.

The structure is particularly intended for use driving drainage, wherein the upper electrode functions as an anode. Consequently, the lower electrode, adapted to function normally as a cathode, is preferably provided in association with a drain, is preferably also an electrokinetic geosynthetic, and is in particular an electrokinetic geosynthetic drain. However, the arrangement confers significant extra functionality over prior art systems using an EKG drainage cathode, even when driven in this conventional manner, and also in allowing the polarity to be reversed for full active control of moisture and other properties at the surface layer.

In use as a drain with the lower electrode as a drainage cathode, moisture is driven by electro-osmosis towards the lower cathode to be drained away. However, the electrode system is driven with sufficient potential difference to ensure that a gas (in this mode of operation oxygen but with polarity reversed hydrogen) is generated at the upper electrode, and thereby generated at the surface layer.

This provides a significant further advantage, in that the generation of any gas will lead to decompaction of the particulate substrate to control the volume in the surface layer. This is of value in particular where the particulate substrate is used to grow vegetable subject matter. Not only is oxygen made available, which is likely to assist in the growth process, but decompaction per se helps to maintain aerobic conditions in the root zone thus aid in the breakdown of dead organic matter, which will assist the nutrient cycle and help to avoid the generation of toxic conditions associated with anoxia such as 'black layer'. However, control of surface compaction, and hence surface physical properties, can also be desirable for other substrates, for example clay-based sports arenas such as tennis courts.

A further advantage of the present invention is that since the anode is an EKG it can have a role in re-enforcement as well as a merely electrical role.

A further advantage of the invention is that it can be used to control pH in the surface layer. For example, it is known that optimum conditions for turf are around a pH of 5.5 to 6.5. Thus, the electro-osmotic reaction can be driven to maintain such a pH, obviating the need for specific chemical treatments to effect such control.

Reference herein to a growing medium is to any particulate solid medium in which vegetable matter can be grown, including natural or artificial soil, loam, earth, ground material or like mixtures, in which control of moisture is necessary to optimise growth.

The upper electrode is disposed in the vicinity of where the roots will lie and is an electrokinetic geosynthetic selected to be generally planar. The EKG may take the form of a grid, sheet, series of strips or any other structure to make up a generally planar extent. It lies generally horizontally to the surface, both allowing control of moisture at the surface in the vicinity of the roots through electro-osmosis, and generating and developing gas at the upper electrode (whether O₂ or H₂ depending on whether the upper electrode is functioning as an anode or a cathode), which together with control of porewater pressure may produce a decompaction effect.

The upper electrode is preferably further adapted to perform a reinforcing role in the upper surface layer of the growing medium or other particulate substrate, for example to anchor the roots of the growing vegetable matter and/or act as a backing layer for an upper layer, for example where the upper layer is removable. In one embodiment, where the upper layer is turf or the like, the EKG of the upper electrode may then serve as a reinforcing backing layer during transportation of the turf, and as a reinforcing root anchoring layer when laid in situ, additional to the electrode function.

The conducting geosynthetic material may have any suitable composition to give conductive properties. For example, the conductive geosynthetic material may comprise a generally inherently non-conductive geosynthetic in association with at least one conducting element to produce a composition conducting geosynthetic material. Alternatively, the geosynthetic material may be inherently conducting, for example by loading with conducting particles. Such inherently conducting geosynthetic material may additionally be associated with at least one separate conducting element, to provide a composite conducting geosynthetic.

In one alternative, the planar upper electrode comprises one or more EKG structures comprising conductive geosynthetic material wherein the conducting geoysnthetic material comprises an open mesh structure.

The EKG structure thus consists essentially only of geosynthetic material in an open mesh structure optionally inherently conducting and/or in association with one or more conducting elements, provided integral to or associated with the open mesh structure.

The conductive geosynthetic mesh in a simple embodiment may comprise a generally planar mesh, with the EKG structure itself comprising one or more such planar meshes. Alternatively, the conductive geosynthetic mesh may be corrugated or may form an enclosing mesh structure defining any solid shape, such as a sphere, ellipsoid, parallelepiped, cube or cone. A particularly preferred structure is an open sleeve structure.

In another alternative the upper electrode comprises one or more EKG structures comprising sheet material, for example non-conducting structural material such as woven or non-woven fabric material, having a pattern of conducting elements incorporated therein, for example comprising conducting strings, wires or the like, woven or sewn into the sheet.

In a further alternative the upper electrode comprises a sheet of inherently conductive material, for example polymeric material loaded with carbon.

Any suitable material may be used for the lower electrode. The lower electrode could be any conductor with associated drain to remove accumulated water when the electrode is acting as a cathode. In particular the lower electrode comprises a conductive drain, and is preferably an electrokinetic geosynthetic, and is in particular an electrokinetic geosynthetic drain of known type. EKGs as above described or of other suitable configurations will suggest themselves.

The lower electrode need not itself be planar, but a series must be provided disposed generally under the upper electrode and parallel thereto to cover the whole area.

Suitable geosynthetic materials will be familiar to those skilled in the art. These will include polymer materials such as polyethylene, polypropylene, PVC, certain polyesters and the like, and carbon fibres. Geosynthetic materials may be made conducting by provision of separate conducting elements and/or by loading with conducting material.

Such conducting elements may be provided in any known conducting material. For example, the conducting elements may be pure or composite metallic such as metals or metal powders (steel, copper) dispersed in suitable solid carriers, or conducting non-metallic, such as carbon, a conducting polymer or composite thereof.

Conveniently, the conducting element comprises conducting non-metallic material. Such material is, by definition, less prone to corrosion than metallic material. More preferably, the conducting element comprises conducting non-metallic polymeric material. Alternatively, the conducting element comprises metallic material and is wholly surrounded by a preferably conducting non-metallic geosynthetic outer layer. Both of these are likely to increase in situ life.

A particularly preferred planar EKG is as described in PCT/GB01/02915.

In a further embodiment of the invention, the properties of the upper electrode are pre-selected in combination with the applied potential difference such as to generate resistance heating at the upper electrode. This gives additional functionality to a pair of electrodes disposed in accordance with the method. Resistance heating is not necessarily the most efficient or effective way of temperature control of the surface, and in circumstances where temperature control, and in particular surface heating, is desired, for example to prevent freezing of the surface layer, a further form of heating, whether disposed within the soil structure or applied to the surface from above, is likely to be the main mode of temperature control. Nevertheless, a degree of additional heating through resistance heating is an effective additional feature of the present invention.

The structure preferably further comprises suitable connections for connecting the electrodes to an electrical supply. The connection may be any connection known in the art for connecting wires or for connecting a wire and conducting shaped electrode. Preferably the connection is insulated to prevent degradation by corrosion due to the presence of water, for example by immersing in resin or enclosing within an insulating box. Preferably a plurality of connections have similar electrical continuity and present similar resistance, ensuring uniform power and minimal potential loss over the electro osmosis system. If resistive electrical heating is required in the absence of any electroosmotic effects the electrical supply may be configured to deliver an AC or pulsed normal and reverse polarity electrical field.

The structure preferably further comprises an electrical supply to apply a potential difference across the electrodes. Preferably, the supply is controllable to allow the supply to be switched off when action is not required and/or to allow the potential difference to be varied in accordance with varying operational requirements and/or to allow the polarity to be reversible such that the upper electrode can function both as an anode with water being driven electro-osmotically to the lower cathode to reduce moisture content at the roots of the growing vegetable matter therein, and as a cathode with water being driven electro-osmotically towards the roots to increase the moisture content, and/or raise the porewater pressure to effect decompaction of the soil.

Preferably, the structure further comprises a control system acting on the electrical supply to effect such control. The control system may be user operable and/or pre-programmable. The control system may incorporate sensors in association with the growing medium to feed back information concerning the conditions therewithin and further incorporate control means responsive to the condition signals to effect appropriate controls over the electrical supply in response thereto.

Thus, in accordance with a particularly preferred embodiment, the structure further comprises one or more arrays of sensor devices, disposed in the vicinity of the roots of the growing vegetable matter in use, and adapted to provide information concerning physical and/or chemical parameters within the growing medium which can then be made available at a control site. For example, in response to varying signals from these sensors a user at the control site can alter conditions of operation of the system and/or an automatic control unit can act to adjust operation of the system to keep the observed parameter within a pre-determined desired range.

In accordance with a further aspect of the invention, there is provided a method for conditioning a particulate substrate according to claim 14.

In a preferred embodiment of the method potential difference is applied such that the upper electrode acts as an anode, the lower electrode acts as a cathode, and the process acts to drive moisture electro-osmotically towards the lower electrode away from the vicinity of the roots, and generates oxygen gas in the vicinity of the upper electrode and in the vicinity of the roots. This produces the drainage decompaction and aeration functions above described. Further in this embodiment the upper surface may be compacted to provide a harder surface to effect increased traction or ball bounce as desired.

In an alternative embodiment, the method also comprises applying a potential difference such that the upper electrode acts as a cathode, water is driven electro-osmotically towards the upper electrode, and hydrogen gas is generated thereat, thus increasing the moisture content in the vicinity of the roots of growing vegetable matter and also performing a decompaction function by generation of gas and by raising the porewater pressure in the matrix of the soil.

In a refinement of the method, to apply a chemical treatment to the surface region of the growing medium, for example a fertiliser, conditioner, herbicide, pH control or the like, comprising applying a chemical treatment having suitable desired properties to a top surface of the particulate structure, applying water on to the top surface, operating the method as above described wherein the upper electrode functions as an anode and the lower electrode functions as a cathode to draw the water and chemical treatment species electro-kinetically through the growing medium or other particulate structure. It is thus possible to treat a growing medium, such as turf or agricultural growing medium, actively with a chemical species, rather than passively by applying a chemical species and relying upon rain/applied water and the action of gravity.

In accordance with a further aspect of the invention, there is provided a method for constructing a conditionable particulate substrate in accordance with claim 17.

In one embodiment the method for constructing the substrate comprises installation of the electrodes in situ. In particular, the lower electrode is installed by dragging through the substrate in situ using a mole plough in familiar manner. The upper electrode is installed by removal and subsequent replacement of the upper layer of the substrate, for example in the case of turf by rolling back and subsequently replacing an upper turf layer.

In an alternative embodiment the method for constructing the conditionable substrate comprises assembling growing medium and electrodes together, wherein a base layer is provided, and sequentially laid thereon are the lower electrode including an associated drain, a body layer of particulate substrate, the upper electrode, and an upper layer of particulate substrate. In particular the substrate comprises growing medium optionally including growing vegetable matter. For example, the upper layer comprises a turf layer, and the turf layer conveniently incorporates the upper electrode as a backing layer thereto.

The invention will now be described by way of example only with reference to Figures 1-3 of the accompanying drawings wherein:
Figure 1 is a schematic representation of a turf structure for a sports ground or the like embodying the principles of the invention;
Figure 2 is an example of suitable material for the upper electrode;
Figure 3 is an example of an alternative material for the upper electrode.

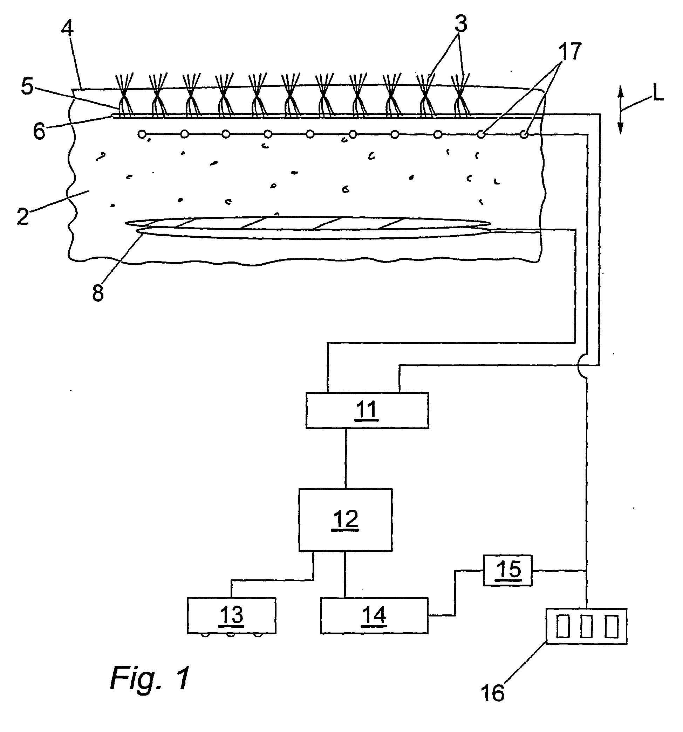

Referring to Figure 1, a turf structure for a sports pitch or the like is shown comprising a natural or artificial soil growing medium (2) with grass (3) growing generally at the surface (4) thereof. The roots (5) of the grass (3) can be seen growing down into a surface layer (L) of the growing medium (2), and it is this surface layer in particular which it is desired should be conditioned for optimum growing performance.

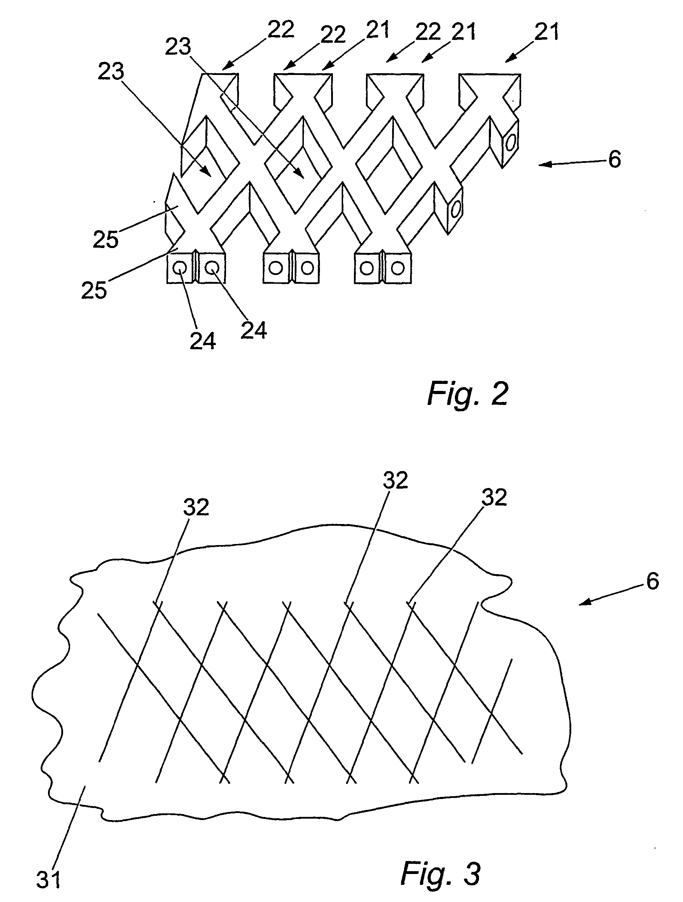

Two electrodes are provided within the turf structure to give the potential for electro-osmotic control of conditions within the soil. An upper electrode (6) comprises a planar electro-kinetic geosynthetic, for example of the type illustrated in Figures 2 or 3. A lower electrode (8) comprises an electro-kinetic geosynthetic drain of conventional design.

The remainder of Figure 1 illustrates the control system purely schematically. A power source (11) applies a potential difference between the two electrodes (6, 8) to drive the electro-osmotic process. In normal operation this will be such that the upper electrode (6) functions as an anode and the lower electrode (8) functions as a cathode. As a result water will be drawn towards the lower electrode (8) to be drained away in the usual manner. Further, and significantly in relation to the present invention, oxygen will be generated in the vicinity of the upper electrode (6), producing a decompaction effect in the surface layer (L), and aerating the roots (5).

Control of the power source (11) is by means of a control unit (12), for example at a remote control station. The control unit is operated by manual controls (13) within a control centre, and/or by a suitably pre-programmed automatic control system (14).

An array of sensors (17) is provided in the vicinity of the roots (5) to monitor conditions in the surface layer (L). Any relevant parameters can be monitored. These parameters may be displayed at a control centre on the display unit (16) to allow a user to make any necessary adjustments to operation of the system and/or passed to a comparator (15) which compares with pre-determined data stored in the automatic controller (14) and causes it to act upon the control unit (12) to ensure that conditions are maintained within a pre-selected desired parameter.

As has been noted, the present invention confers a range of functionalities to the structure, including dewatering, aeration, decompaction, pH control and resistive heating. Parameters relating to any or all of these can be monitored and the condition of the soil controlled accordingly in the above manner.

A preferred electro-kinetic geosynthetic material for the upper electrode is shown in Figure 2. A portion of the electrode (6) is shown comprising a mesh structure. The mesh comprises a first set of parallel EKG members (21) and a second set of parallel EKG members (22) overlapping and arrayed to produce a rhombic mesh structure with apertures (23). The material of the mesh comprises conducting core elements (24), which in this example are stainless steel, enclosed in a conducting geosynthetic outer layer (25), which in this example is a carbon loaded polymeric material. This particular sandwich arrangement produces good environmental resistance *in situ* in the soil.

An alternative arrangement for the planar upper electrode (6) is shown in Figure 3. In this case, the basis of the electrode is a non-conductive fabric sheet (31) which serves to give structure to the EKG and a degree of reinforcement to the upper surface layer. The sheet is preferably of woven or non-woven polymeric fabric adapted to resist environmental degradation *in situ* in the ground. Conducting elements take the form of stainless steel fibres (32) stitched into the sheet (31), again in a generally rhombic array, to provide a planar EKG structure.

## Claims

1. A particulate substrate comprising a particulate base (2) serving as a growing medium including growing vegetable matter (3) in a surface layer (L) thereof, an upper anode (6) comprising a generally planar electrokinetic geosynthetic disposed generally horizontally within the particulate base (2) to lie in a surface layer thereof (L) in the vicinity of the roots (5) of the growing vegetable matter (3), a lower cathode (8) disposed within the particulate base (2) generally underneath and parallel to the anode (6), means to connect an electrical power source (11) between the anode (6) and cathode (8) to apply a potential difference thereacross to drive an electro-osmotic process and thus to alter the moisture level in the vicinity of the anode and further to generate oxygen at the anode, control porewater pressure, and decompact the surface layer of the particulate.

2. The structure of claim 1 wherein the cathode (8) is provided in association with a drain.

3. The structure of claim 2 wherein the cathode (8) is an electrokinetic geosynthetic drain.

4. The structure of any preceding claim wherein the anode (6) is a generally planar electrokinetic geosynthetic taking the form of a grid, sheet, series of strips or other structure to make up a generally planar extent.

5. The structure of any preceding claim wherein the anode is further adapted to perform a reinforcing role in the upper surface layer of the particulate substrate.

6. The structure of claim 5 wherein the anode serves to anchor the roots of vegetable matter growing at a surface of the particulate substrate.

7. The structure of any preceding claim wherein the planar anode comprises one or more EKG structures comprising conductive geosynthetic material wherein the conducting geoysnthetic material comprises an open mesh structure.

8. The structure of claim 7 wherein the conductive geosynthetic mesh comprises a generally planar mesh, with the EKG structure itself comprising one or more such planar meshes.

9. The structure of one of one of claims 1 to 6 wherein the planar anode comprises one or more EKG structures comprising sheet material, for example non-conducting structural material such as woven or non-woven fabric material, having a pattern of conducting elements incorporated therein, for example comprising conducting strings, wires or the like, woven or sewn into the sheet.

10. The structure of one of one of claims 1 to 6 wherein the planar anode comprises a sheet of inherently conductive material, for example polymeric material loaded with carbon.

11. The structure of any preceding claim wherein the properties of the anode are pre-selected in combination with the applied potential difference such as to generate resistance heating at the upper electrode in use.

12. The structure of any preceding claim further comprising an electrical supply to apply a potential difference across the electrodes, suitable connections for connecting the electrodes to the electrical supply, and a control system to control the supply in accordance with varying operational requirements

13. The structure of claim 12 further comprising as part of the control system sensors provided in association with the particulate substrate to feed back condition signals to the control system concerning the conditions therewithin and further incorporates control means responsive to the condition signals to effect appropriate controls over the electrical supply in response thereto.

14. A method for conditioning a particulate substrate growing medium (2) having vegetable matter (3) growing in a surface layer (L) thereof comprises disposing an anode (6) comprising a generally planar electrokinetic geosynthetic generally horizontally in a surface layer thereof in the vicinity of the roots (5) of the vegetable matter (3); disposing a cathode (8) generally underneath and parallel to the anode (6); applying a potential difference across the two electrodes such as to drive an electro-osmotic process and thus act to drive moisture electro-osmotically towards the cathode away from the vicinity of the roots and further to generate oxygen gas in the vicinity of the anode, control porewater pressure and decompact the surface layer of the particulate.

15. The method of claim 13 or 14 further comprising associating the cathode (8) with a drain.

16. The method of one of claims 13 to 15 further comprising the step of applying a chemical treatment having suitable desired properties to a top surface of the structure, applying water on to the top surface of the particulate substrate, applying the potential difference to draw the water and chemical treatment species electro-kinetically through the substrate.

17. A method for constructing a conditionable particulate substrate structure comprises providing a suitable particulate substrate (2); disposing an anode (6) comprising a generally planar electrokinetic geosynthetic generally horizontally in an upper layer thereof (L) in the vicinity of the roots (5) of vegetable matter (3) growing in the said upper layer (L); disposing a lower cathode (8) generally underneath and parallel to the anode (6), preferably in association with a drain.

18. The method of claim 17 comprising installation of the electrodes to a particulate substrate in situ.

19. The method of claim 18 wherein the lower electrode is installed by dragging through the substrate in situ using a mole plough and the upper electrode is installed by removal and subsequent replacement of the upper layer of the substrate.

20. The method of claim 17 comprising assembling growing medium and electrodes together, wherein a base layer is provided, and sequentially laid thereon are the lower electrode including an associated drain, a body layer of particulate substrate, the upper electrode, and an upper layer of particulate substrate.

## Patentansprüche

1. Partikelförmiges Substrat, umfassend eine partikelförmige Basis (2), die als Nährmedium dient, einschließend wachsende pflanzliche Substanz (3) in einer Oberflächenschicht (L) davon, eine obere Anode (6), umfassend einen im Allgemeinen planaren elektrokinetischen Geokunststoff, angeordnet im Allgemeinen horizontal innerhalb der partikelförmigen Basis (2), um in einer Oberflächenschicht davon (L) in der Nähe der Wurzeln (5) der wachsenden pflanzlichen Substanz (3) zu liegen, eine untere Katode (8), angeordnet innerhalb der partikelförmigen Basis (2) im Allgemeinen unterhalb und parallel zur Anode (6), Mittel zum Verbinden einer elektrischen Energiequelle (11) zwischen der Anode (6) und der Katode (8), um eine Potentialdifferenz dort dazwischen anzulegen, um ein elektro-osmotisches Verfahren anzutreiben und folglich den Feuchtigkeitsgrad in der Nähe der Anode zu verändern und ferner Sauerstoff an der Anode zu erzeugen, Porenwasserdruck zu steuern und die Oberflächenschicht des Partikulats aufzulockern,

2. Struktur nach Anspruch 1, bei welcher die Katode (8) in Verbindung mit einer Ableitung bereitgestellt ist.

3. Struktur nach Anspruch 2, bei welcher die Katode (8) eine elektrokinetische geosynthetische Ableitung ist.

4. Struktur nach einem der vorherigen Ansprüche, bei welcher die Anode (6) ein im Allgemeinen planarer elektrokinetischer Geokunststoff ist, der die Form eines Gitters, einer Lage, einer Serie von Streifen oder eine andere Struktur annimmt, um eine im Allgemeinen planare Erstreckung auszumachen.

5. Struktur nach einem der vorherigen Ansprüche, bei welcher die Anode ferner angepasst ist, um eine verstärkende Rolle in der oberen Oberflächenschicht des partikelförmigen Substrats zu erfüllen.

6. Struktur nach Anspruch 5, bei welcher die Anode dazu dient, die Wurzeln der pflanzlichen Substanz, die an einer Oberfläche des partikelförmigen Substrats wachsen, zu verankern.

7. Struktur nach einem der vorherigen Ansprüche, bei welcher die planare Anode eine oder mehrere EKG-Strukturen umfasst, umfassend leitendes geosynthetisches Material, wobei das leitende geosynthetische Material eine offene Maschenstruktur umfasst.

8. Struktur nach Anspruch 7, bei welcher die leitende geosynthetische Maschenstruktur eine im Allgemeinen planare Maschenstruktur umfasst, wobei die EKG-Struktur selbst eine oder mehrere solcher planarer Maschenstrukturen umfasst.

9. Struktur nach einem der Ansprüche 1 bis 6, bei welcher die planare Anode eine oder mehrere EKG-Strukturen umfasst, umfassend Lagenmaterial, beispielsweise nicht leitendes Strukturmaterial wie beispielsweise gewebtes oder nicht gewebtes Gewebematerial mit einem Muster von darin eingearbeiteten leitenden Elementen, beispielsweise umfassend leitende Schnüre, Drähte oder dergleichen, die in die Lage gewoben oder genäht sind.

10. Struktur nach einem der Ansprüche 1 bis 6, bei welcher die planare Anode eine Lage von inhärent leitendem Material umfasst, beispielsweise mit Kohlenstoff beladenes Polymermaterial.

11. Struktur nach einem der vorherigen Ansprüche, bei welcher die Eigenschaften der Anode vorausgewählt sind in Kombination mit der angelegten Potentialdifferenz, um eine Widerstandserwärmung bei der in Verwendung befindlichen oberen Elektrode zu erzeugen.

12. Struktur nach einem der vorherigen Ansprüche, ferner umfassend eine Stromversorgung, um eine Potentialdifferenz über die Elektroden anzulegen, geeignete Verbindungen zum Verbinden der Elektroden an die Stromversorgung, sowie ein Steuerungssystem zum Steuern der Versorgung gemäß der variierenden Betriebserfordernisse.

13. Struktur nach Anspruch 12, ferner umfassend als Teil des Steuerungssystems Sensoren, die in Verbindung mit dem partikelförmigen Substrat bereitgestellt sind, um Zustandssignale zum Steuerungssystem betreffend die Zustände dort dazwischen rückzukoppeln, sowie ferner einarbeitend Steuermittel, ansprechend auf die Zustandssignale, um geeignete Steuerungen über die Stromversorgung in Antwort darauf zu bewirken.

14. Verfahren der Konditionierung eines partikelförmigen Substratnährmediums (2) mit in einer Oberflächenschicht (L) davon wachsender pflanzlicher Substanz (3), umfassend das Anordnen einer Anode (6), umfassend einen im Allgemeinen planaren elektrokinetischen Geokunststoff im Allgemeinen horizontal in einer Oberflächenschicht davon in der Nähe der Wurzeln (5) der pflanzlichen Substanz (3); Anordnen einer Katode (8) im Allgemeinen unterhalb und parallel zur Anode (6); Anlegen einer Potentialdifferenz über die zwei Elektroden, um ein elektro-osmotisches Verfahren anzutreiben und folglich zu bewirken, dass Feuchtigkeit elektro-osmotisch in Richtung der Katode weg von der Nähe der Wurzeln getrieben wird, und ferner um Sauerstoffgas in der Nähe der Anode zu erzeugen, Porenwasserdruck zu steuern und die Oberflächenschicht des Partikulats aufzulockern.

15. Verfahren nach Anspruch 13 oder 14, ferner umfassend das Verbinden der Katode (8) mit einer Ableitung.

16. Verfahren nach einem der Ansprüche 13 bis 15, ferner umfassend den Schritt des Anwendens einer chemischen Behandlung mit geeigneten gewünschten Eigenschaften auf eine obere Oberfläche der Struktur, Aufbringen von Wasser auf die obere Oberfläche des partikelförmigen Substrats, Anlegen einer Potentialdifferenz, um das Wasser und chemische Behandlungsspezies elektrokinetisch durch das Substrat zu ziehen.

17. Verfahren zum Konstruieren einer konditionierbaren partikelförmigen Substratstruktur, umfassend das Bereitstellen eines geeigneten partikelförmigen Substrats (2); Anordnen einer Anode (6), umfassend einen im Allgemeinen planaren elektrokinetischen Geokunststoff, im Allgemeinen horizontal in einer oberen Schicht davon (L) in der Nähe der Wurzeln (5) der pflanzlichen Substanz (3), die in der oberen Schicht (L) wächst; Anordnen einer unteren Katode (8) im Allgemeinen unterhalb und parallel zur Anode (6), vorzugsweise in Verbindung mit einer Ableitung.

18. Verfahren nach Anspruch 17, umfassend die Installation der Elektroden an ein partikelförmiges Substrat in situ.

19. Verfahren nach Anspruch 18, bei welchem die untere Elektrode durch Ziehen durch das Substrat in situ unter Verwendung eines Maulwurfspflugs installiert wird und die obere Elektrode durch Entfernen und anschließendes Ersetzen der oberen Schicht des Substrats installiert wird.

20. Verfahren nach Anspruch 17, umfassend das Zusammensetzen von Wachstumsmedium und Elektroden, wobei eine Basisschicht bereitgestellt wird, und wobei sequentiell darauf die untere Elektrode einschließlich einer damit verbundenen Ableitung, eine Körperschicht von partikelförmigem Substrat, die obere Elektrode und eine obere Schicht von partikelförmigem Substrat gelegt werden.

## Revendications

1. Substrat particulaire comprenant une base particulaire (2) servant de milieu de culture incluant des matières végétales en culture (3) sur une couche en surface (L) de celui-ci, une anode supérieure (6) comprenant un matériau géotextile électrocinétique généralement plan, disposé généralement horizontalement au sein de la base particulaire (2) pour se trouver dans une couche en surface (L) de celui-ci à proximité des racines (5) des matières végétales en culture (3), une cathode inférieure (8) disposée au sein de la base particulaire (2) généralement sous l'anode (6) et parallèlement à celle-ci, un moyen pour connecter une source de puissance électrique (11) entre l'anode (6) et la cathode (8) pour y appliquer une différence de potentiel pour faire fonctionner un processus électroosmotique et ainsi modifier le taux d'humidité à proximité de l'anode et de plus générer de l'oxygène à l'anode, contrôler la pression interstitielle, et décompacter la couche en surface du substrat particulaire.

2. Structure selon la revendication 1, dans laquelle la cathode (8) est fournie conjointement avec un drain.

3. Structure selon la revendication 2, dans laquelle la cathode (8) est un drain géotextile électrocinétique.

4. Structure selon l'une quelconque des revendications précédentes, dans laquelle l'anode (6) est un matériau géotextile électrocinétique, généralement plan, prenant la forme d'une grille, d'une feuille, de séries de bandes ou d'une autre structure pour réaliser une étendue généralement plane.

5. Structure selon l'une quelconque des revendications précédentes, dans laquelle l'anode est en outre adaptée pour avoir un rôle de renforcement dans la couche en surface supérieure du substrat particulaire.

6. Structure selon la revendication 5, dans laquelle l'anode sert à ancrer les racines des matières végétales poussant sur une surface du substrat particulaire.

7. Structure selon l'une quelconque des revendications précédentes, dans laquelle l'anode plane comprend une ou plusieurs structures EKG comprenant un matériau géotextile conducteur, dans laquelle le matériau géotextile conducteur comprend une structure à maille ouverte.

8. Structure selon la revendication 7, dans laquelle la maille en matériau géotextile conducteur comprend une maille généralement plane, avec la structure EKG elle-même comprenant une ou plusieurs de telles mailles planes.

9. Structure selon l'une des revendications 1 à 6, dans laquelle l'anode plane comprend une ou plusieurs structures EKG comprenant un matériau en feuille, par exemple un matériau structural non conducteur tel qu'un matériau en tissu tissé ou non tissé, ayant une armure d'éléments conducteurs incorporés dans celui-ci, par exemple comprenant des cordes conductrices, des fils conducteurs ou équivalents, tissés ou cousus dans la feuille.

10. Structure selon l'une des revendications 1 à 6, dans laquelle l'anode plane comprend une feuille d'un matériau intrinsèquement conducteur, par exemple un matériau polymérique chargé avec du carbone.

11. Structure selon l'une quelconque des revendications précédentes, dans laquelle les propriétés de l'anode sont présélectionnées en association avec la différence de potentiel appliquée, de façon à générer de la chaleur résistive au niveau de l'électrode supérieure en fonctionnement.

12. Structure selon l'une quelconque des revendications précédentes comprenant en outre une alimentation électrique pour appliquer une différence de potentiel entre les électrodes, des connections appropriées pour relier les électrodes à l'alimentation électrique, et un système de contrôle pour contrôler l'alimentation conformément à des exigences opérationnelles variables.

13. Structure selon la revendication 12 qui comprend en outre comme partie du système de contrôle des capteurs fournis en association avec le substrat particulaire pour retransmettre des signaux conditionnels au système de contrôle concernant les conditions à l'intérieur de celle-ci, et en outre incorpore un moyen de contrôle qui réagit aux signaux conditionnels pour effectuer des contrôles appropriés sur l'alimentation électrique en réponse à ceux-ci.

14. Procédé de conditionnement d'un milieu de culture constitué d'un substrat particulaire (2) ayant des matières végétales en culture (3) dans une couche en surface (L) de celui-ci, lequel comprend la mise en place d'une anode (6) comprenant un matériau géotextile électrocinétique généralement plan, disposé généralement horizontalement dans une couche en surface de celui-ci, à proximité des racines (5) des matières végétales (3) ; la mise en place d'une cathode (8) généralement sous l'anode (6) et parallèlement à celle-ci ; l'application d'une différence de potentiel entre les deux électrodes de façon à faire fonctionner un processus électroosmotique et ainsi à agir pour éloigner électroosmotiquement l'humidité de la proximité des racines vers la cathode et en plus à générer de l'oxygène à proximité de l'anode, contrôler la pression interstitielle et décompacter la couche en surface du substrat particulaire.

15. Procédé selon la revendication 13 ou la revendication 14 comprenant en outre d'utiliser la cathode (8) en association avec un drain.

16. Procédé selon l'une des revendications 13 à 15 comprenant en outre l'étape consistant à appliquer un traitement chimique ayant des propriétés désirées appropriées à une surface supérieure de la structure, appliquer de l'eau sur la surface supérieure du substrat particulaire, appliquer la différence de potentiel pour attirer l'eau et les espèces du traitement chimique électrocinétiquement à travers le substrat.

17. Procédé de construction d'une structure de substrat particulaire conditionnable, lequel comprend la fourniture d'un substrat particulaire approprié (2) ; la mise en place d'une anode (6) comprenant un matériau géotextile électrocinétique généralement plan, disposé généralement horizontalement dans une couche en surface supérieure (L) de celle-ci à proximité des racines (5) des matières végétales en culture (3) dans ladite couche supérieure (L) ; la mise en place d'une cathode inférieure (8) disposée généralement sous l'anode (6) et parallèlement à celle-ci, de préférence en association avec un drain.

18. Procédé selon la revendication 17 comprenant l'installation des électrodes dans un substrat particulaire in situ.

19. Procédé selon la revendication 18 dans lequel l'électrode inférieure est installée par entraînement in situ au travers du substrat en utilisant une charrue-taupe et l'électrode supérieure est installée en retirant et en remplaçant ultérieurement la couche supérieure du substrat.

20. Procédé selon la revendication 17 comprenant l'assemblage conjointement du milieu de culture et des électrodes, dans lequel une couche de base est fournie, et sont déposés sur celle-ci en séquence, l'électrode inférieure comprenant un drain associé, une couche formant le corps du substrat particulaire, l'électrode supérieure, et une couche supérieure du substrat particulaire.
